# FASCICULE DE BREVET EUROPEEN

(11) **EP 1 194 677 B1**
(45) Date de publication et mention de la délivrance du brevet: **07.01.2004**
(21) Numéro de dépôt: 00948076.5
(22) Date de dépôt: 04.07.2000
(51) Int. Cl.: E21B 17/01, F16L 1/24

(54) **DISPOSITIF DE LIAISON FOND-SURFACE COMPORTANT UNE CONDUITE SOUS-MARINE ASSEMBLEE A AU MOINS UN FLOTTEUR**
VERBINDUNGSVORRICHTUNG ZWISCHEN BODEN UND OBERFLÄCHE, MIT EINER MIT MINDESTENS EINEM SCHWIMMER BEFESTIGTEN UNTERWASSERLEITUNG
DEVICE CONNECTING THE SEA FLOOR WITH THE SURFACE COMPRISING A SUBMARINE PIPELINE ATTACHED TO AT LEAST ONE FLOATER

(30) Priorité: 13.07.1999 FR 9909424
(43) Date de publication de la demande: 10.04.2002
(73) Titulaire: SAIPEM S.A., 78180 Montigny-le-Bretonneux (FR)
(72) Inventeur: DAUPHIN, Raphael, F-78000 Versailles (FR); GASSERT, Michael, F-67700 Saverne (FR); QUINIOU, Valérie, F-75013 Paris (FR); ROCHER, Xavier, F-78400 Chatou (FR)
(74) Mandataire: Domange, Maxime
(86) Numéro de dépôt international: PCT/FR2000/001899
(87) Numéro de publication internationale: WO 2001/004454

(56) Documents cités:
- FR-A- 2 754 011
- US-A- 2 476 309
- US-A- 3 017 934
- US-A- 3 855 656
- US-A- 3 952 526
- US-A- 3 981 357

## Description

La présente invention concerne le domaine connu des liaisons fond-surface du type comportant une conduite sous-marine verticale, appelée riser, reliant le fond de la mer jusqu'à un support flottant installé en surface.

Dès que la profondeur d'eau devient importante l'exploitation des champs de production notamment des champs pétroliers s'effectue en général à partir de supports flottants. Ce support flottant comporte en général des moyens d'ancrage pour rester en position malgré les effets des courant, des vents et de la houle. Il comporte aussi en général des moyens de stockage et de traitement du pétrole ainsi que des moyens de déchargement vers des pétroliers enleveurs. Ces derniers se présentent à intervalle régulier pour effectuer l'enlèvement de la production. L'appellation de ces supports flottants est le terme anglo-saxon "Floating Production Storage Offloading" (signifiant "moyen flottant de stockage, de production et de déchargement") ci-après abrégé par "FPSO". De nombreuses variantes ont été développées tels les SPARS, longs cigares flottants maintenus en position par des ancrages caténaires, ou encore les TLPs, plates-formes à lignes d'ancrage tendues, lesdites lignes étant en général verticales.

Les têtes de puits sont souvent réparties sur la totalité du champ et les conduites de production, ainsi que les lignes d'injection d'eau et les câbles de contrôle commande, sont déposées sur le fond de la mer en direction d'un emplacement fixe, à la verticale duquel le support flottant est positionné en surface.

Certains puits sont situés à la verticale du support flottant et l'intérieur du puits est alors accessible directement depuis la surface. Dans ce cas la tête de puits équipée de son "arbre de Noël" peut être installée en surface, à bord du support flottant. On peut alors effectuer, à partir d'un derrick installé sur ledit support flottant, toutes les opérations de forage, de production et de maintenance du puits pendant toute la durée de vie dudit puits. On parle alors de tête de puits sèche.

Pour maintenir le riser équipé de sa tête de puits sèche en position sensiblement verticale il convient d'exercer vers son extrémité supérieure une traction vers le haut qui peut être appliquée, soit par un système de tensionnement à câbles à l'aide de treuils ou de vérins hydrauliques installés sur le support flottant, soit à l'aide de flotteurs répartis le long du riser et installés à diverses profondeurs, soit encore par une combinaison des deux.

On connaît le brevet (IFP N°2 754 011) décrivant une barge et un système de guidage pour riser, ce dernier étant équipé de flotteurs.

Les SPARS et TLPs sont elles aussi équipées de risers sous-tendus par des flotteurs.

Dans le cas d'un tensionnement par flotteurs on est conduit :
- soit à fabriquer des éléments en mousse syntactique installés en demi-coquille autour du riser,
- -soit à construire des flotteurs métalliques ou en matériaux composites remplis de gaz, de préférence un gaz inerte tel que l'azote.

La mousse syntactique et une mousse constituée de micro-billes de verre imprégnées dans une résine de type époxy ou polyuréthanne. Ce type de mousse présente des qualités exceptionnelles de tenue à la pression et est utilisée de manière courante pour les grandes profondeurs. Ce type de mousse présente l'inconvénient d'être très coûteuse et délicate à fabriquer.

La profondeur d'eau de certains champs pétroliers dépassant 1 500m et pouvant atteindre 2 000 à 3 000m, le poids des risers sur de telles hauteurs nécessite, pour leur maintien en position, des efforts pouvant atteindre et dépasser plusieurs centaines de tonnes. On utilise alors, pour ces ultra grands fonds (1000-3000m) des éléments de flottabilité de type "bidon" installés sur les risers à diverses profondeurs. Les flotteurs concernés sont alors de grandes dimensions avec notamment un diamètre qui peut varier de 1,5 à 5m, voire supérieur à 5m, et une longueur de 10 à 20m pour une flottabilité pouvant atteindre 100 tonnes.

Le flotteur et la conduite sont soumis aux effets de la houle, du courant, mais étant raccordés au FPSO en surface, sont aussi indirectement soumis aux effets du vent. Il en résulte des mouvements latéraux et verticaux importants (plusieurs mètres) de l'ensemble riser-flotteur-barge, surtout dans la zone sujette à la houle. Ces mouvements engendrent des efforts différentiels importants entre le riser et le flotteur. De plus les courbures prises par le riser créent des moments de flexion extrêmement importants dans la zone de changement d'inertie consistant dans le raccordement entre le riser et le flotteur.

De manière à minimiser les efforts engendrés par le courant et la houle agissant sur l'ensemble riser-flotteur, les flotteurs sont en général circulaires et sont installés autour du riser et coaxialement à ce dernier.

En outre les flotteurs sont en général fixés sur le riser de manière à ce que la liaison riser-flotteur assure l'étanchéité du dit flotteur et puisse confiner le gaz de remplissage. La solution couramment employée consiste à encastrer par soudage, en partie haute comme en partie basse, le flotteur au riser. De multiples renforts sont rajoutés pour assurer la résistance de l'ensemble.

Au niveau de cette liaison entre le riser et le flotteur, l'inertie de l'ensemble varie de manière considérable lorsque l'on passe de la section du riser à la section du flotteur.

Ces variations importantes d'inertie conduisent à des mauvaises répartitions de contraintes, ce qui engendre des zones très localisées où les contraintes peuvent devenir inadmissibles et engendrer, soit des phénomènes de rupture brutale, soit des phénomènes de fatigue conduisant à l'apparition de fissures puis à la ruine. Ces contraintes localisées nécessitent pour renforcer la zone sensible, l'utilisation de pièces de transition, en général de forme conique et de grandes dimensions, appelées "tapered joints". Ces pièces peuvent atteindre dans certains cas 10m de longueur et nécessitent dans le meilleur des cas l'utilisation d'aciers à très hautes performances. Mais bien souvent, il faut avoir recours à l'utilisation du titane qui est environ 5 à 10 fois plus coûteux que les meilleurs aciers. De plus les pièces sont en général de formes complexes et la qualité de réalisation doit être extrême de manière à fournir le service attendu pendant toute la durée de vie de ces équipements qui dépasse couramment 25 ans.

On connaît dans US 3 952 526 et US 3 981 357 des systèmes de jonction entre des réservoirs-flotteurs et risers, dans lesquels on utilise des pièces en matériau élastomère.

Ces systèmes de flottabilité permettent de réduire le système de tentionnement situé à bord du support flottant et ils sont en général répartis sur une grande hauteur de la tranche d'eau, de plus ils présentent une flottabilité réduite de quelques centaines de kg, voire d'une tonne ou deux.

Les jonctions sont situées dans la partie haute du flotteur, la partie basse du flotteur étant en général ouverte. De tels dispositifs peuvent transférer des charges correspondant à l'allègement d'une longueur limitée de conduite, mais ils ne conviennent pas pour des flotteurs destinés à supporter, seuls sans l'adjonction de systèmes de tensionnement complémentaires solidaires du support flottant, une très grande longueur de riser, par exemple 500 à 1000 m, voire plus, tels qu'on les rencontre sur les champs pétroliers en mer par grande profondeur, c'est à dire notamment au-delà de 1000 m. En effet, la flottabilité nécessaire pour assurer un tensionnement exclusivement par flotteurs, nécessite de transférer des efforts considérables verticalement et transversalement, lesdits efforts verticaux appliqués en tête de riser pouvant atteindre plusieurs centaines de tonnes, notamment de 300 à 500 tonnes.

Le but de la présente invention est de fournir un nouveau type de jonction entre le riser et le bidon qui permette de supporter et de transférer de fortes charges tout en palliant les inconvénients des flotteurs précités assemblés autour de ladite conduite par encastrage.

Un but de la présente invention est donc de fournir un nouveau moyen de jonction (riser-flotteur) qui soit simple, flexible et fiable mécaniquement notamment qui réduise les phénomènes de fatigue et d'usure dus aux contraintes agissant au niveau de la jonction soumise à des charges de plusieurs centaines de tonnes.

Un autre but de la présente invention est de fournir une jonction riser-flotteur pour un riser destiné aux grandes profondeurs et essentiellement, voire exclusivement, tendu par des flotteurs de grandes dimensions.

Pour ce faire, la présente invention a pour objet un dispositif de liaison fond-surface comportant une conduite sous-marine consistant en une colonne montante ou riser, assemblée à au moins un flotteur comportant un bidon coaxial entourant ladite conduite et des moyens de jonction dudit bidon et de ladite conduite au niveau des orifices supérieur et inférieur dudit bidon traversés par ladite conduite caractérisé en ce que :
■ lesdits moyens de jonction comprennent une articulation flexible, élastique et étanche assemblée autour de ladite conduite à au moins l'un des orifices supérieur ou inférieur dudit bidon,
■ ladite articulation flexible, élastique et étanche comprend une butée lamifiée comportant une première platine solidaire de ladite conduite ou dudit bidon et une seconde platine solidaire respectivement dudit bidon ou de ladite conduite, lesdites platines encadrant des couches élastomères en sandwich entre des renforts en matériau rigide, lesdites platines, couches et renforts présentant des surfaces de révolution dont l'axe est constitué par l'axe de ladite conduite et dudit bidon au repos (ZZ'), et
■ ladite butée lamifiée étant :
   - une butée lamifiée tronconique constituée d'une pluralité de couches d'élastomère et de renforts rigides en forme de rondelles ou de forme tronconique superposées, et comportant une platine rigide de forme tronconique s'inscrivant dans une surface enveloppe tronconique, ladite platine tronconique surmontant ladite pluralité de couches élastomère et renforts rigides superposés, ou
   - une butée lamifiée cylindrique constituée d'une pluralité de couches élastomère et de renforts rigides de forme tubulaire coaxiales adjacentes.

Dans lesdites butées lamifiées tronconique ou cylindrique, lesdites couches élastomères et renforts rigides peuvent être continu(e)s ou discontinu(e)s de préférence continues. On entend ici par « discontinue » qu'elle est constituée de plusieurs parties définissant des secteurs de révolution formant ensemble une dite rondelle ou une dite surface de révolution tronconique ou cylindrique.

Dans un mode autre de réalisation lesdits moyens de jonction comportent une articulation flexible, élastique et étanche à chaque orifice dudit bidon

Dans un autre mode de réalisation lesdits moyens de jonction comprennent une articulation étanche à l'un des orifices notamment supérieur dudit bidon et une articulation flexible, élastique et étanche au second orifice.

Plus particulièrement, l'un des orifices supérieur ou inférieur dudit bidon comprend une articulation élastique flexible et étanche constituée d'une dite butée lamifiée cylindrique, et l'autre desdits orifices comprend une butée comportant une platine rigide de forme tronconique avec la grande base dudit cône située dans sa partie inférieure, et ladite platine surmontant de préférence une dite butée lamifiée.

Une articulation flexible, élastique et étanche selon la présente invention, transmet les contraintes au niveau de la jonction
■ en mouvement de rotation de ladite conduite au moins par rapport aux axes perpendiculaires à l'axe dudit bidon de sorte que l'axe de ladite conduite puisse s'écarter angulairement de l'axe dudit bidon au niveau desdits orifices, l'angle entre l'axe de ladite conduite et l'axe dudit bidon au niveau d'un dit orifice variant de préférence de 0 à 10° plus particulièrement de 0 à 5°, et
■ en mouvement(s) comportant une composante de translation transversale de ladite conduite par rapport audit bidon dans les directions perpendiculaires (XX' YY') à l'axe dudit bidon (ZZ') de sorte que l'axe de ladite conduite puisse s'écarter transversalement de l'axe dudit bidon à l'intérieur desdits orifices, plus particulièrement l'axe de l'adite conduite pouvant s'écarter de 0 à 5 cm de l'axe dudit bidon.

De façon avantageuse ladite platine tronconique comporte une cavité cylindrique centrale solidaire de ladite conduite, et lesdites couches élastomères et renforts rigides en forme de rondelles superposées s'inscrivent dans une surface enveloppe tronconique.

Dans un mode de réalisation avantageux, ladite platine tronconique est partie intégrante du riser.

La forme conique selon la présente invention contribue à transmettre progressivement les efforts verticalement sur ladite conduite. La poussée verticale s'exerçant sur le bidon est transmise par la butée lamifiée dans la direction de l'axe de ladite conduite (ZZ'). Ladite butée lamifiée présente une raideur beaucoup faible dans les directions perpendiculaires (XX' et YY'), cette rigidité transversale étant ajustable en fonction de la qualité de l'élastomère, de l'épaisseur des diverses couches d'élastomères et de leur nombre.

Plus particulièrement, ladite butée lamifiée cylindrique comporte une première platine rigide cylindrique intérieure solidaire de la surface externe de ladite conduite et une seconde platine rigide cylindrique extérieure solidaire dudit bidon, de préférence, par une bride annulaire.

La forme cylindrique de la butée lamifiée selon l'invention confère une faible raideur à ladite butée selon l'axe dudit bidon et de ladite conduite (ZZ') et ne transmet pratiquement pas d'effort dans cette direction verticale. En revanche cette forme cylindrique présente une raideur dans les directions perpendiculaires (XX' et YY') qui favorise le transfert de charge entre bidon et conduite tout en autorisant des rotations autour des axes (XX' et YY') et à un moindre niveau autour de l'axe (ZZ').

La combinaison d'une butée lamifiée plane tronconique et d'une butée lamifiée cylindrique favorise tous les mouvements en rotation et translation au niveau des orifices comme mentionné ci-dessus, lesdits mouvements en rotation étant liés à une courbure de ladite conduite à l'intérieur dudit bidon.

De préférence, la flottabilité de ladite conduite sous-marine est assurée par lesdits flotteurs sans l'adjonction de systèmes de tensionnement complémentaire, notamment par câbles, solidaire du support flottant.

D'autres caractéristiques et avantages de la présente invention apparaîtront à la lumière de la description détaillée qui va suivre, en référence aux figures suivantes dans lesquelles :

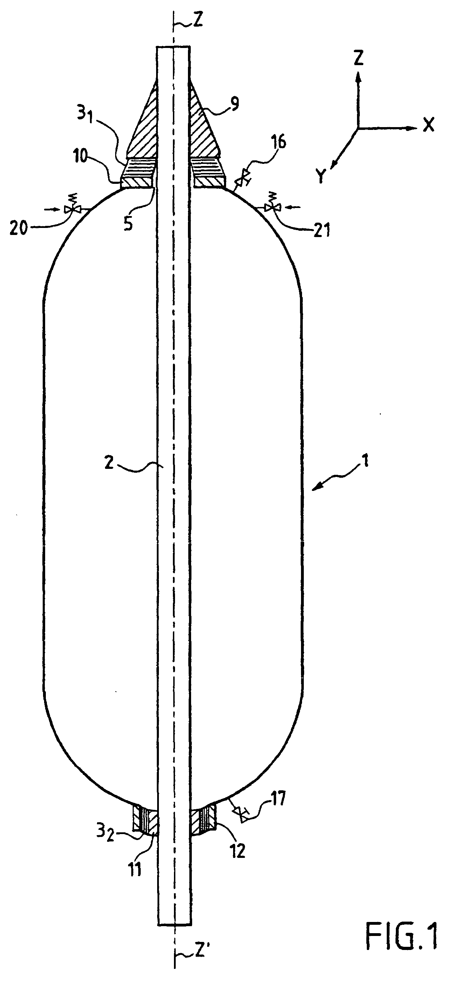

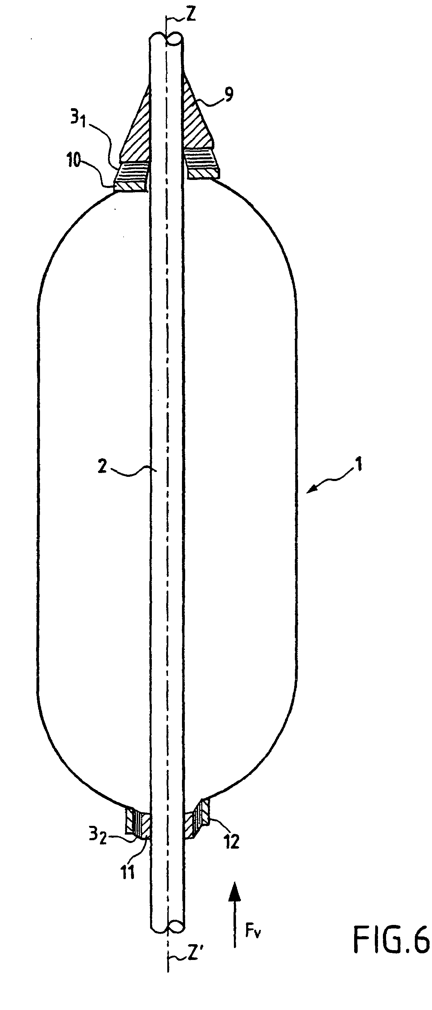

- les figures 1 et 6 et 8 sont des vues de côté d'un riser associé à une coupe en vue de côté d'un bidon 1 équipé en partie haute d'une butée lamifiée plane 3₁ de révolution et en partie basse d'une butée lamifiée cylindrique de révolution 3₂,

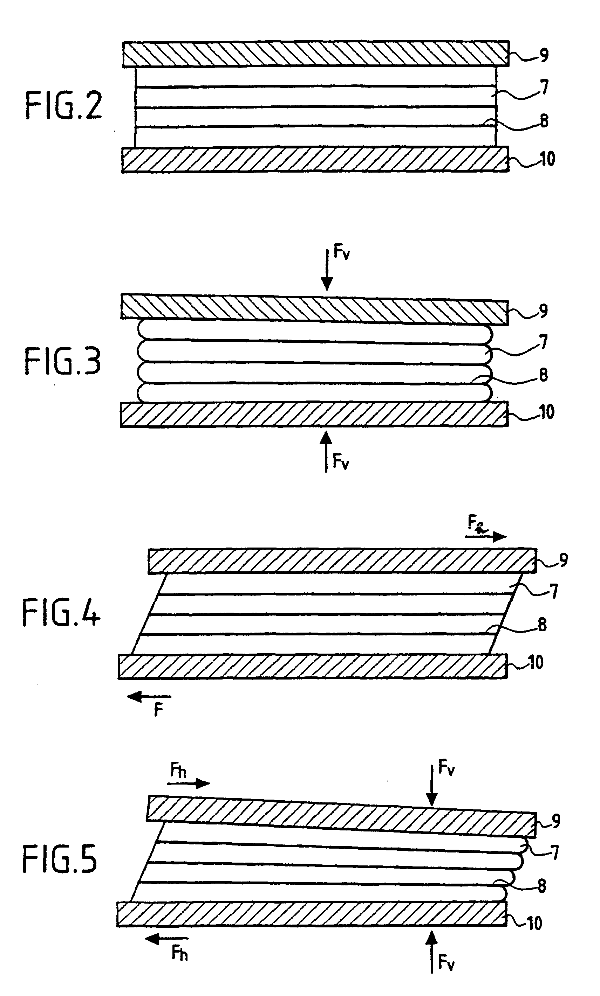

- Les figures 2 à 5 représentent des coupes d'une section de butée lamifiée suivant l'invention montrant comment celle-ci autorise des déplacement latéraux ainsi que des rotations tout en étant capable de supporter des charges verticales considérables en présentant un affaissement minimum. La butée lamifiée est constituée d'une platine supérieure 9 ou extérieure 12 et d'une platine inférieure 10 ou intérieure 11 et d'un sandwich constitué de couches élastomères 7 et de renforts métalliques constitués de tôles 8. Les figures 2 à 5 illustrent donc les mouvements relatifs des platines supérieure et inférieure sous l'effet des charges diverses décrites ci-après. A titre illustratif l'écrasement des couches élastomères peut varier de 0 à 5 cm.
- la figure 2 est une vue de côté d'une butée lamifiée non soumise à efforts,
- la figure 3 est une vue de côté de la même butée lamifié soumise à un effort de compression Fᵥ, induisant une réduction de son épaisseur,
- la figure 4 est une vue de côté de la même butée lamifié 3₁ soumise à un effort de cisaillement Fh créant un déplacement latéral dans la direction de l'effort,
- la figure 5 est une vue de côté de la même butée lamifié 3₁ soumise à deux efforts combinés, l'un horizontal Fₕ provoquant un cisaillement, l'autre vertical Fᵥ provoquant la compression, l'effort vertical est excentré, ce qui se traduit ici par une inclinaison avec affaissement de la partie droite de la butée,
- la figure 6 est une vue en coupe du flotteur, dans laquelle la partie gauche représente la position du flotteur hors de l'eau, la partie droite représentant le même flotteur immergé, la poussée verticale Fᵥ se transmettant à la pièce conique 9 à travers la butée lamifiée plane supérieure 3₁ et mettant cette dernière en compression, la butée cylindrique inférieure 3₂ n'étant alors sollicitée qu'en cisaillement.
- la figure 7 est une vue de côté d'un riser associé à une coupe en vue de côté d'un bidon équipé en partie haute d'une butée lamifiée cylindrique de révolution assemblée par bride sur le flotteur et en partie basse d'une butée lamifiée plane de révolution assemblée, elle aussi, par bride sur le bidon,
- la figure 8 est une vue en coupe du flotteur libre 1 dans l'air ou l'eau, le riser 2 étant déformé selon un rayon de courbure R, créant ainsi une déformation de chacune des butées 3₁ et 3₂, par combinaison de cisaillements et d'efforts de compression différentiels.
- la figure 9 est une vue en coupe d'un bidon fixé rigidement au riser à sa partie supérieure (pas de butée lamifiée) et possédant à sa partie basse une butée lamifiée cylindrique 3₂ à large débattement travaillant essentiellement en compression comme montré sur la figure 10.
- la figure 10 est une vue en coupe du bidon selon la figure 9, montrant la courbure du riser 2, laquelle reste tangente à l'axe du flotteur 1, au niveau de la pièce conique d'encastrement supérieur 9, la butée lamifiée inférieure 3₂ absorbant alors l'intégralité de la déformation de sorte que l'axe de ladite conduite peut s'écarter angulairement et transversalement de l'axe dudit bidon au niveau dudit orifice.
- la figure 11 est une vue en coupe de la partie supérieure du riser dans laquelle l'articulation est réalisée par une rotule sphérique 9 munie d'une membrane intermédiaire 22 à faible frottement et munie d'un joint d'étanchéité 18 et assemblée sur une bride 19 solidaire du flotteur, l'étanchéité de l'assemblage étant assuré par un joint 24
- la figure 12 est une coupe en vue de côté de la platine conique 9 associée à une portion de riser 2, obtenue par forgeage et usinage, avant la mise en place des couches d'élastomère 7 et des renforts métalliques 8,
- la figure 13 est une coupe en vue de côté d'une longueur de riser obtenue par forgeage et par usinage, présentant dans la zone renforcée un filetage 23 sur lequel est vissée-collée la platine intérieure 11 d'une butée lamifiée cylindrique de révolution,

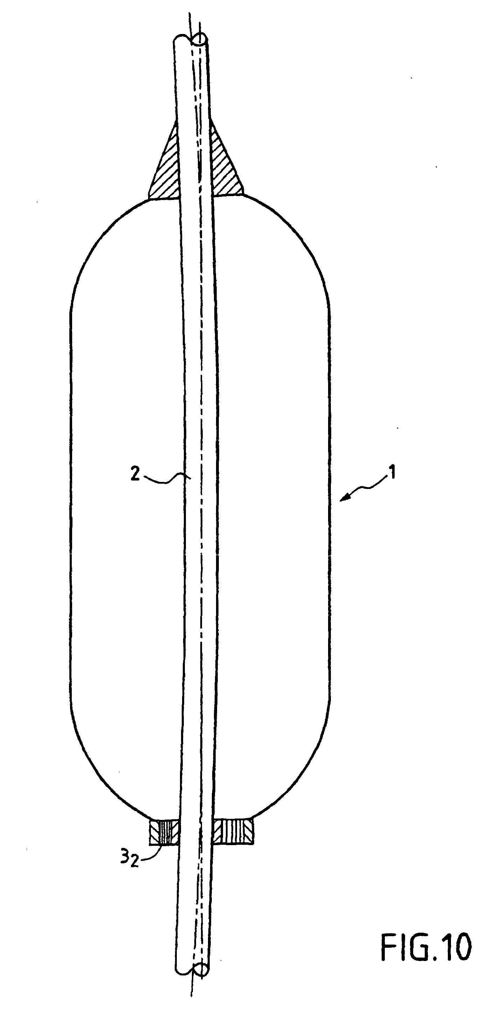

Dans les modes de réalisation des figures 1 à 10 les butées lamifiées comportent des couches élastomères, renforts métalliques et platines présentant des surfaces de révolution dont l'axe est constitué par l'axe de ladite conduite et dudit bidon au repos ZZ'.

Pour la clarté de la description de l'invention l'ensemble conduite-bidon sera décrit par rapport à un référentiel orthonormé XYZ dont l'axe ZZ' coïncide avec l'axe de la conduite et du bidon au repos, et l'axe XX' se trouve dans le plan de la figure et l'axe YY' dans le plan perpendiculaire à la figure.

Sur les figures 1, 6, 7 et 8 la butée lamifiée plane est une butée lamifiée plane tronconique comportant une pièce d'appui rigide de forme tronconique 9 solidaire par sa base d'une couche élastomère 7 en forme de rondelle, ladite pièce tronconique comportant une cavité cylindrique centrale solidaire de ladite conduite, et lesdites couches élastomères 7 et renforts rigides 8 en forme de rondelles superposées s'inscrivent dans une surface enveloppe tronconique.

Sur la figure 1, le dispositif comprend :
- une butée lamifiée plane tronconique 3₁ à l'extrémité supérieure dudit bidon au dessus de l'orifice supérieur 5 dudit bidon et
- une butée lamifiée cylindrique 3₂ à l'extrémité inférieure dudit bidon au dessous de l'orifice inférieur 6 dudit bidon

Sur les figures 1 à 10 la butée lamifiée cylindrique est une butée cylindrique constituée de couches élastomères 7 et renforts rigides 8 de forme tubulaire coaxiales adjacentes.

Plus particulièrement la butée lamifiée cylindrique comporte une platine rigide cylindrique intérieure 11 solidaire de la surface externe de ladite conduite et une platine rigide cylindrique extérieure 12 solidaire dudit bidon par une bride annulaire 13 de ladite platine rigide cylindrique extérieur.

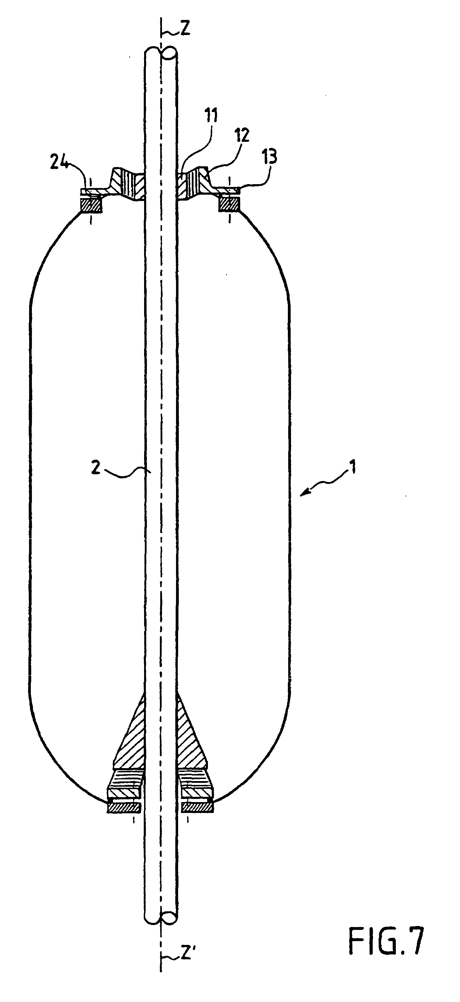

Sur la figure 7 le dispositif comprend :
- une butée lamifiée plane tronconique 3₁ à l'extrémité inférieure dudit bidon au dessus de l'orifice inférieure 6 à l'intérieur dudit bidon et
- une butée lamifiée cylindrique 3₂ à l'extrémité supérieure dudit bidon au dessus de l'orifice supérieur 5 à l'extérieur dudit bidon

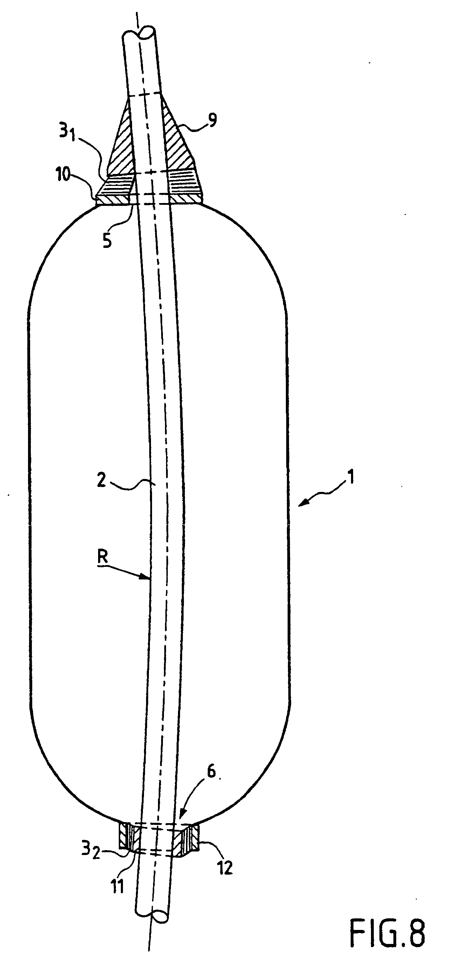

Les efforts combinés horizontaux de cisaillement et de compression sur ladite butée lamifiée représentés sur les figures 2 à 5 provoquent et autorisent des mouvements de rotation de ladite conduite 2 par rapport aux axes XX' et YY' perpendiculaires à l'axe du bidon ZZ', avec une composante de translation de faible amplitude au niveau desdits orifices comme représenté sur la figure 8.

Il apparaît sur la figure 8 que l'assemblage du bidon 1 avec ladite conduite 2 à l'aide des butées lamifiées planes tronconiques 3₁ et cylindriques 3₂ assure une flexibilité et une élasticité des jonctions au niveau des orifices supérieur et inférieur du bidon qui permet de découpler les mouvements entre le bidon 1 et la conduite 2 tout en maintenant l'étanchéité du dispositif.

Selon l'invention le flotteur est dimensionné pour être en surpression interne dans chacune des phases opérationnelles, depuis sa préparation en surface avant installation, pendant son installation et pendant toute sa durée de vie opérationnelle.

Dans un mode de réalisation préféré du flotteur, celui-ci est constitué, dans sa partie cylindrique d'une simple tôle roulée dont l'épaisseur est calculée en tenant compte de la pression différentielle entre l'intérieur du flotteur et l'extérieur du flotteur, les extrémités dudit flotteur étant des surfaces gauches se rapprochant de paraboloïdes de révolution ou plus simplement de demi-sphères. Le calcul des épaisseurs nécessaires et des facteurs de sécurité imposés par les réglementations étant connu de l'homme de l'art dans le domaine des réservoirs sous pression ne sera pas décrit ici dans ses détails. Le flotteur selon l'invention ne se trouvant jamais en dépression par rapport à l'extérieur, ne nécessite en conséquence aucun renfort intérieur et présentera ainsi un rapport flottabilité sur poids propre de structure optimal.

La butée lamifiée supérieure 3₁ est constituée d'une partie conique 9 métallique solidaire du riser 2 constituant la platine supérieure 9 et d'une platine inférieure 10 métallique solidaire du corps du flotteur au niveau de l'orifice 5. La platine supérieure conique 9 est assemblée sur le riser 2 soit par vissage, soit par soudage ou encore par collage structurel.

Dans le cas du vissage, l'étanchéité de l'ensemble peut être obtenu par des joints non représentés, ou plus simplement par simple encollage des filets avant vissage définitif.

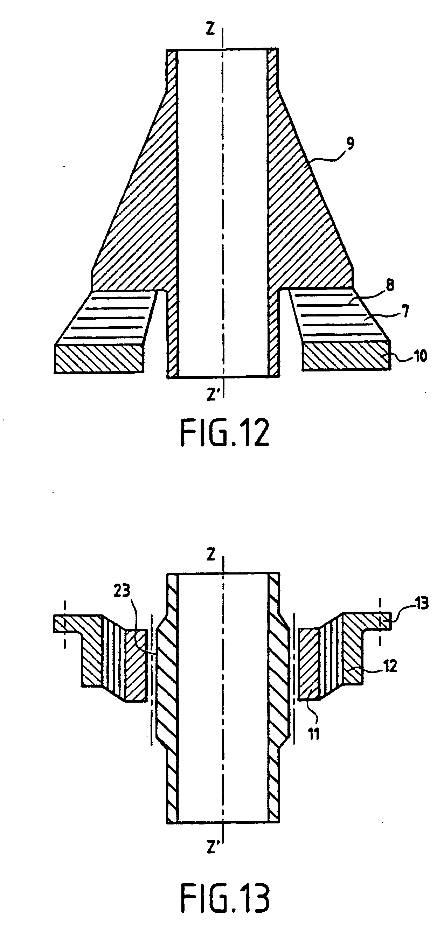

Dans un mode de réalisation de l'invention représenté figure 12, la platine tronconique supérieure 9 est intégrée au riser. A cet effet, la platine 9 est fabriquée avec une portion de riser 2 à chaque extrémité, par exemple 30 cm vers le haut et 60 cm vers le bas. L'ensemble est avantageusement obtenu par forgeage d'un seul lingot, y compris l'ébauche du tube à un diamètre inférieur au diamètre définitif. Après forgeage, la pièce est usinée aux cotes définitives et les composants élastomères assemblés par collage-vulcanisation ou polymérisation sur les platines supérieures et inférieures de façon connue de l'homme de l'art.

L'assemblage de l'ensemble sur la partie supérieure du riser ainsi que sur la partie inférieure peut se faire par tous moyens tels que soudage, vissage ou encore par brides avec joint d'étanchéité.

De la même manière la platine interne 11 de la butée inférieure peut être obtenue de forge avec une portion de riser, mais en raison des efforts beaucoup plus faibles dans cette zone du flotteur la platine pourra être simplement rapportée par soudage, vissage ou collage sur la paroi extérieure du riser comme représenté à la figure 13.

Dans un mode de réalisation particulièrement avantageux de l'invention, la platine tronconique 9 transférant l'effort vertical vers le riser est installé en partie basse du flotteur. Dans ce cas, ladite butée tronconique 9 se trouvera à l'intérieur dudit flotteur et la butée cylindrique sera alors installée à la partie supérieure du flotteur comme représenté sur la figure 7.

En procédant ainsi l'effort de flottabilité crée dans la paroi du flotteur des efforts de traction verticaux, et ainsi le flotteur tire le riser vers le haut, alors que dans la configuration précédemment décrite, les efforts dus à la flottabilité sont transmis par compression de la paroi du flotteur vers la platine conique solidaire du riser ; le flotteur pousse alors le riser vers le haut. En procédant ainsi, on diminue le risque de flambage de la paroi du flotteur car au sein de ladite paroi les contraintes dues au transfert de charge ainsi que les contraintes dues à la pression interne sont des contraintes de traction.

Le riser peut être fabriqué à bord de la barge par assemblage successifs de longueurs unitaires, en général un multiple de 12m. Les modes d'assemblages en pas à pas sont connus de l'homme de l'art dans le domaine du forage en mer et ne sera pas décrit ici dans ses détails. Ces assemblages sont réalisés, soit par vissage, soit par soudage ou encore par brides.

La majorité des éléments du riser sont de simples tubes, seuls quelques éléments comporteront des flotteurs selon l'invention. Ils sont installés en différents endroits de la tranche d'eau, leur forme et leur volume étant optimisé en fonction des conditions océano-météo et de la profondeur d'eau sur site. Ainsi on sera amené à installer, par exemple et à titre purement indicatif, un flotteur de 60 tonnes à la profondeur -30m, un flotteur de 20 tonnes à la profondeur de -50m et une série de 5 flotteurs de 5 tonnes installés tous les 10m à partir de -100m.

Pour faciliter son installation le bidon est avantageusement équipé d'un premier orifice muni d'une vanne de remplissage 16 situé dans sa partie haute, à proximité du point le plus haut et d'un second orifice muni d'une vanne de vidange 17, localisé dans sa partie basse, à proximité du point le plus bas. Lors de la descente du flotteur dans l'eau, les deux orifices sont ouverts et le flotteur se remplit intégralement d'eau. Lorsque le riser est en position finale, une conduite tubulaire remontant en surface est connectée à l'orifice supérieur et un gaz est injecté à une pression supérieure à la pression correspondant à la profondeur dudit flotteur. Le gaz chasse l'eau qui s'échappe alors par l'orifice inférieur. Lorsque le flotteur est vide d'eau, du gaz s'échappe par l'orifice inférieur. La vanne inférieure 17 est alors fermée et l'injection de gaz est poursuivie jusqu'à ce que la pression interne du flotteur atteigne une valeur préalablement fixée.

A titre d'exemple, si l'on désire atteindre une pression différentielle de 2 bars entre l'intérieur et l'extérieur du sommet d'un flotteur de 10 m de hauteur installé à -50m de profondeur, la pression régnant à ladite profondeur étant sensiblement de 5 bars, la pression du gaz devra atteindre 7 bars. On notera que la pression différentielle au niveau du sommet du flotteur est bien de 2 bars, mais qu'elle n'est plus que de 1 bar au bas du flotteur car la pression extérieure correspond à -60m c'est à dire sensiblement à 6 bars.

Sur la figure 1 le bidon 1 est en outre équipé dans sa partie haute d'une soupape de sûreté de décharge 20 tarée notamment à +2 bars, comme sécurité "anti-explosion" et dans la partie haute d'un clapet de décharge 21 taré notamment à - 1 bar comme sécurité "anti-implosion" en cas de fuite dans la partie de ladite conduite située dans ledit bidon ou de fuite dans l'enveloppe dudit bidon ou desdites articulations flexibles.

Les valeurs de pression données ci-dessus correspondent à la pression différentielle maximale acceptable entre intérieur et extérieur pour éviter une explosion c'est à dire une ruine par éclatement ou une implosion c'est à dire une ruine par flambage du bidon.

Le tarage de ces deux dispositifs de sécurité est conditionné par les limites de fonctionnement résultant du calcul de la résistance de la paroi du bidon.

Des moyens de contrôle en temps réel des principaux paramètres (pression, température, état de fonctionnement des clapets de sécurité) sont installés sur le bidon et les informations correspondante transmises en surface.

On modifiera avantageusement la flottabilité par ballastage du flotteur en utilisant ces deux orifices pour introduire ou retirer un certain volume d'eau et simultanément purger ou réinjecter du gaz de manière à limiter à un niveau admissible, les contraintes dans les divers composants mécaniques. Toutes ces opérations de purge ou de ballastage peuvent être effectuées soit par plongeur, soit à l'aide de ROV, sous-marins automatiques d'intervention pilotés depuis la surface et équipés d'outils divers tels des bras manipulateurs.

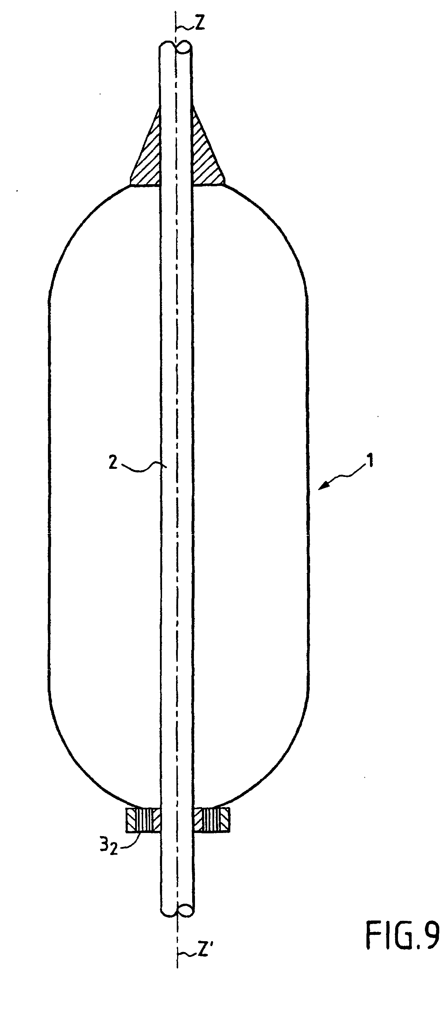

L'intérieur du bidon peut être rempli partiellement de mousse. Les butées lamifiées sont décrites comme étant à renforts 8 plans ou cylindriques, mais lesdits renforts 8 peuvent être aussi bien coniques que sphériques ou de toute autre forme. Ils peuvent être continus ou non telle qu'en forme de secteurs. En particulier un résultat similaire à la butée cylindrique est obtenu à l'aide d'une enveloppe torique enserrant un fluide (type chambre à air). Les mouvements engendre alors des déformations du tore et des transferts de fluide au sein dudit tore. Ceci est valable surtout pour l'articulation inférieure et plus particulièrement dans le cas des figures 9-10 qui nécessite un grand débattement.

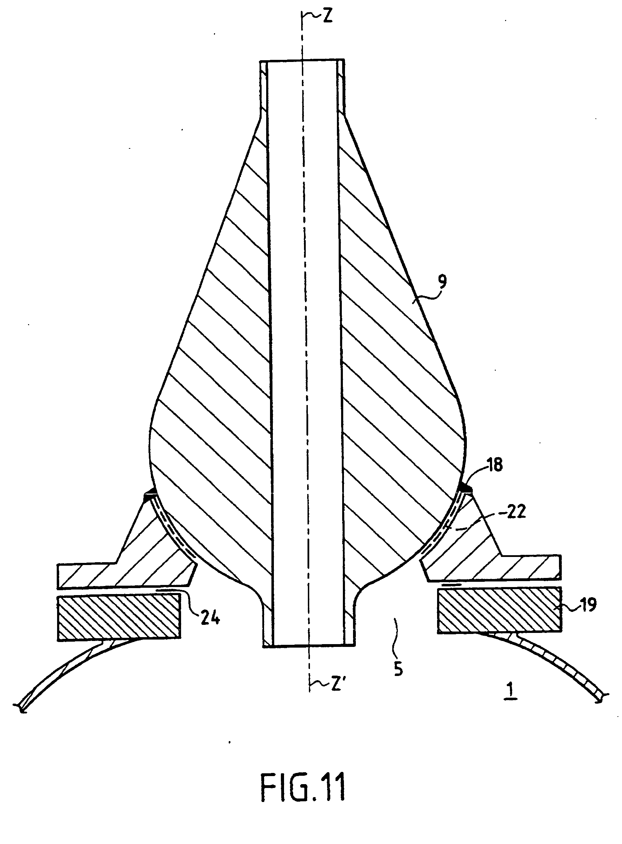

On notera que dans le mode de réalisation de la figure 11 comportant une rotule sphérique à la place d'une butée lamifiée, le mouvement de la conduite par rapport au bidon comprend un plus grand degré de liberté en rotation par rapport aux axes ZZ' et tout axe perpendiculaire mais sans composante de translation.

## Revendications

1. Dispositif de liaison fond-surface comportant une conduite sous-marine assemblée à au moins un flotteur comportant un bidon coaxial
(1) entourant ladite conduite (2) et des moyens de jonction (3) dudit bidon et de ladite conduite au niveau de l'orifice supérieur (5) dudit bidon (1) traversé par ladite conduite (2) **caractérisé en ce que** :
■ il comprend, en outre, desdits moyens de jonction (3) dudit bidon
(1) et de ladite conduite (2) au niveau de l'orifice inférieur (6) dudit bidon
(1) traversé par ladite conduite (2),
■ lesdits moyens de jonction comprennent une articulation flexible, élastique et étanche (3) assemblée autour de ladite conduite (2) à au moins l'un des orifices supérieurs (5) ou inférieurs (6) dudit bidon (1),
■ ladite articulation flexible, élastique et étanche comprend une butée lamifiée comportant une première platine (9, 11) solidaire de ladite conduite ou dudit bidon et une deuxième platine (10, 12) solidaire respectivement dudit bidon ou de ladite conduite, lesdites platines encadrant des couches élastomères (7) en sandwich entre des renforts en matériau rigide (8), lesdites platines, couches et renforts présentant des surfaces de révolution dont l'axe est constitué par l'axe de ladite conduite et dudit bidon au repos (ZZ'), et
■ ladite butée lamifiée étant :
- une butée lamifiée plane tronconique constituée d'une pluralité de couches d'élastomère (7) et de renforts rigides (8) en forme de rondelles superposées, et comportant une platine rigide de forme tronconique (9) s'inscrivant dans une surface enveloppe tronconique, ladite platine tronconique surmontant ladite pluralité de couches élastomère et renforts rigides superposés, ou
- une butée lamifiée cylindrique constituée d'une pluralité de couches élastomère (7) et de renforts rigides (8) de forme tubulaire coaxiales adjacentes.

2. Dispositif selon la revendication 1, **caractérisé en ce que** lesdits moyens de jonction (3) comprennent au moins une dite articulation flexible élastique et étanche à chaque dit orifice (5, 6).

3. Dispositif suivant la revendication 1 ou 2, **caractérisé en ce que** ladite platine tronconique (9) comporte une cavité cylindrique centrale solidaire de ladite conduite.

4. Dispositif selon l'une des revendications 1 à 3, **caractérisé en ce que** lesdites couches élastomères (7) et renforts rigides (8) en forme de rondelles superposées s'inscrivent dans une surface d'enveloppe tronconique

5. Dispositif selon l'une des revendications 1 à 4, **caractérisé en ce que** ladite butée lamifiée comporte une platine rigide cylindrique intérieure (11) solidaire de la surface externe de ladite conduite et une platine rigide cylindrique extérieure (12) solidaire dudit bidon, de préférence, par une bride annulaire (13).

6. Dispositif selon l'une quelconque des revendications 1 à 5, **caractérisé en ce que** ladite butée lamifiée plane tronconique est placée à l'extrémité supérieure dudit bidon au-dessus dudit orifice supérieur (5) à l'extérieur dudit bidon.

7. Dispositif selon l'une quelconque des revendications 1 à 5, **caractérisé en ce que** ladite butée lamifiée plane tronconique est placée à l'extrémité inférieure dudit bidon (1) au-dessous dudit orifice inférieur (6) à l'extérieur dudit bidon.

8. Dispositif selon l'une quelconque des revendications 1 à 6, **caractérisé en ce qu'**il comprend :
- une butée lamifiée plane tronconique (3₁) à l'extrémité supérieure dudit bidon au-dessus de l'orifice supérieur (5) dudit bidon et
- une butée lamifiée cylindrique (3₂) à l'extrémité inférieure dudit bidon au-dessous de l'orifice inférieur (6) dudit bidon

9. Dispositif selon l'une quelconque des revendications 1 à 6, **caractérisé en ce que** l'un des orifices supérieurs ou inférieurs dudit bidon comprend une articulation élastique flexible et étanche constituée d'une dite butée lamifiée cylindrique, et l'autre desdits orifices comprend une butée comportant une platine rigide de forme tronconique avec la grande base dudit cône située dans sa partie inférieure, ladite platine surmontant de préférence une dite butée lamifiée.

10. Dispositif selon l'une des revendications 1 à 9, **caractérisé en ce que** ladite platine tronconique est partie intégrante du riser.

11. Dispositif selon l'une quelconque des revendications **1 à 5, 7, 9 et 10**, **caractérisé en ce qu'**il comprend :
- une butée lamifiée plane tronconique (3₁) à l'extrémité inférieure dudit bidon au-dessus de l'orifice inférieur (6) à l'intérieur dudit bidon et
- une butée lamifiée cylindrique (3₂) à l'extrémité supérieure dudit bidon

12. Dispositif selon l'une quelconque des revendications 1 à 11, **caractérisé en ce que** ladite articulation flexible transmet les contraintes au niveau de la jonction
■ en mouvement de rotation de ladite conduite au moins par rapport aux axes perpendiculaires (XX', YY') à l'axe dudit bidon (ZZ'), de sorte que l'axe de ladite conduite puisse s'écarter angulairement de l'axe dudit bidon au niveau desdits orifices, et
■ en mouvement(s) comportant une composante de translation transversale de ladite conduite au moins par rapport audit bidon dans les directions perpendiculaires (XX', YY') à l'axe dudit bidon (ZZ'), de sorte que l'axe de ladite conduite puisse s'écarter transversalement de l'axe dudit bidon à l'intérieur desdits orifices.

13. Dispositif selon l'une quelconque des revendications 1 à 8, **caractérisé en ce que** ledit bidon comporte au moins deux soupapes de décharge tarées comme sécurité respectivement anti-explosion (20) et anti-implosion (21) en cas de fuite dans la partie de ladite conduite située à l'intérieur dudit bidon ou dans l'enveloppe dudit bidon ou dans ladite articulation flexible.

14. Dispositif selon l'une des revendications 1 à 13, **caractérisé en ce que** la flottabilité de ladite conduite sous-marine est assurée par lesdits flotteurs sans l'adjonction de systèmes de tensionnement complémentaire solidaire du support flottant.

## Patentansprüche

1. Verbindungsvorrichtung zwischen Boden und Oberfläche mit einer Unterwasserleitung, die an wenigstens einem Schwimmkörper befestigt ist, der einen die Leitung (2) umgebenden, koaxialen Kanister (1) und Mittel (3) zum Verbinden des Kanisters mit der Leitung in Höhe der von der Leitung (2) durchquerten oberen Öffnung (5) des Kanisters (1) umfasst,
**dadurch gekennzeichnet, dass**:
■ sie außerdem Mittel (3) zum Verbinden des Kanisters (1) mit der Leitung (2) in Höhe der von der Leitung (2) durchquerten unteren Öffnung (6) des Kanisters (1) umfasst,
■ die Verbindungsmittel ein biegbares, elastisches und dichtes Gelenk (3) umfassen, das um die Leitung (2) herum an zumindest der oberen (5) oder unteren (6) Öffnung des Kanisters (1) befestigt ist,
■ das biegbare, elastische und dichte Gelenk einen laminierten Anschlag aufweist, der eine fest an der Leitung oder dem Kanister befestigte erste Platte (9, 11) und eine fest an dem Kanister bzw. der Leitung befestigte zweite Platte (10, 12) umfasst, wobei die Platten Elastomerschichten (7) einfassen, die sandwichartig zwischen Verstärkungen (8) aus einem starren Material liegen, und die Platten, Schichten und Verstärkungen Rotationsflächen aufweisen, deren Achse von der Achse der Leitung und des Kanisters in Ruhestellung (ZZ') gebildet ist,
■ es sich bei dem laminierten Anschlag handelt um
- einen laminierten, ebenen, kegelstumpfförmigen Anschlag, der aus einer Mehrzahl von Elastomerschichten (7) und starren Verstärkungen (8) in Form von übereinander liegenden Scheiben gebildet ist und eine kegelstumpfförmige starre Platte (9) umfasst, die sich in eine kegelstumpfförmige Mantelfläche einfügt, wobei die kegelstumpfförmige Platte über der Vielzahl übereinander liegender Elastomerschichten und starren Verstärkungen angeordnet ist, oder
- einen laminierten zylindrischen Anschlag, der aus einer Mehrzahl rohrförmiger koaxialer, aneinander grenzender Schichten aus Elastomer (7) und starren Verstärkungen (8) gebildet ist.

2. Vorrichtung nach Anspruch 1,
**dadurch gekennzeichnet, dass** die Verbindungsmittel (3) wenigstens ein biegbares, elastisches und dichtes Gelenk an jeder der genannten Öffnungen (5, 6) aufweisen.

3. Vorrichtung nach Anspruch 1 oder 2,
**dadurch gekennzeichnet, dass** die kegelstumpfförmige Platte (9) eine mittige zylindrische Vertiefung aufweist, die fest mit der Leitung verbunden ist.

4. Vorrichtung nach einem der Ansprüche 1 bis 3,
**dadurch gekennzeichnet, dass** sich die Elastomerschichten (7) und starren Verstärkungen (8) in Form von übereinander liegenden Scheiben in eine kegelstumpfförmige Mantelfläche einfügen.

5. Vorrichtung nach einem der Ansprüche 1 bis 4,
**dadurch gekennzeichnet, dass** der laminierte Anschlag eine innere zylindrische, starre Platte (11) umfasst, die fest mit der Außenseite der Leitung verbunden ist, sowie eine äußere zylindrische, starre Platte (12), die mit dem Kanister vorzugsweise durch einen ringförmigen Flansch (13) fest verbunden ist.

6. Vorrichtung nach einem der Ansprüche 1 bis 5,
**dadurch gekennzeichnet, dass** der laminierte, ebene, kegelstumpfförmige Anschlag am oberen Ende des Kanisters über der oberen Öffnung (5) außerhalb des Kanisters angeordnet ist.

7. Vorrichtung nach einem der Ansprüche 1 bis 5,
**dadurch gekennzeichnet, dass** der laminierte, ebene, kegelstumpfförmige Anschlag am unteren Ende des Kanisters (1) unterhalb der unteren Öffnung (6) außerhalb des Kanisters angeordnet ist.

8. Vorrichtung nach einem der Ansprüche 1 bis 6,
**dadurch gekennzeichnet, dass** sie umfasst:
- einen laminierten ebenen, kegelstumpfförmigen Anschlag (3₁) am oberen Ende des Kanisters über der oberen Öffnung (5) des Kanisters und
- einen laminierten zylindrischen Anschlag (3₂) am unteren Ende des Kanisters unterhalb der unteren Öffnung (6) des Kanisters.

9. Vorrichtung nach einem der Ansprüche 1 bis 6,
**dadurch gekennzeichnet, dass** die obere oder untere Öffnung des Kanisters ein elastisches, biegbares und dichtes Gelenk umfasst, das von einem laminierten zylindrischen Anschlag gebildet ist, und dass die andere Öffnung einen Anschlag aufweist, der eine kegelstumpfförmige starre Platte umfasst, wobei die große Grundfläche des Kegels in seinem unteren Teil angeordnet ist, wobei die Platte vorzugsweise über einem laminierten Anschlag liegt.

10. Vorrichtung nach einem der Ansprüche 1 bis 9,
**dadurch gekennzeichnet, dass** die kegelstumpfförmige Platte Bestandteil des Risers ist.

11. Vorrichtung nach einem der Ansprüche 1 bis 5, 7, 9 oder 10,
**dadurch gekennzeichnet, dass** sie umfasst:
- einen laminierten ebenen, kegelstumpfförmigen Anschlag (3₁) am unteren Ende des Kanisters über der unteren Öffnung (6) innen im Kanister und
- einen laminierten zylindrischen Anschlag (3₂) am oberen Ende des Kanisters.

12. Vorrichtung nach einem der Ansprüche 1 bis 11,
**dadurch gekennzeichnet, dass** die Beanspruchungen in Höhe der Verbindung durch das biegbare Gelenk übertragen werden in
■ eine Drehbewegung der Leitung wenigstens in Bezug auf die zur Achse des Kanisters (ZZ') rechtwinklig verlaufenden Achsen (XX', YY'), so dass sich die Achse der Leitung in Höhe der Öffnungen winkelförmig von der Achse des Kanisters entfernen kann, und
■ eine Bewegung bzw. Bewegungen, die eine Komponente einer quer verlaufenden Translationsbewegung der Leitung wenigstens in Bezug auf den Kanister in den senkrecht zur Achse des Kanisters verlaufenden Richtungen (XX', YY') aufweisen, so dass sich die Achse der Leitung innen in den Öffnungen quer zur Achse des Kanisters entfernen kann.

13. Vorrichtung nach einem der Ansprüche 1 bis 8,
**dadurch gekennzeichnet, dass** der Kanister wenigstens zwei kalibrierte Entlastungsventile zum Explosions- (20) bzw. Implosionsschutz (21) im Falle von Leckagen des im Kanisterinneren oder in der Hülle des Kanisters oder in dem biegbaren Gelenk gelegenen Teils der Leitung umfasst.

14. Vorrichtung nach einem der Ansprüche 1 bis 13,
**dadurch gekennzeichnet, dass** die Schwimmfähigkeit der Unterwasserleitung durch die Schwimmkörper ohne Anbringung von fest mit dem schwimmenden Träger verbundenen zusätzlichen Spannsystemen gewährleistet ist.

## Claims

1. A bottom-to-surface connection system comprising a submarine pipe assembled to at least one float having a coaxial can (1) surrounding said pipe (2) and junction means (3) for joining said can to said pipe at the top orifice (5) of said can (1) through which said pipe (2) passes, the system being **characterised in that**:
• it further comprises said junction means (3) for joining said can (1) to said pipe (2) at the bottom orifice (6) of said can (1) through which said pipe (2) passes;
• said junction means comprise a resilient and leakproof flexible joint (3) assembled around said pipe (2) at at least one of the top and bottom orifices (5, 6) of said can (1);
• said resilient and leakproof flexible joint includes a laminated abutment comprising a first plate (9, 11) secured to said pipe or to said can, and a second plate (10, 12) secured to said can or to said pipe, respectively, said plates sandwiching layers of elastomer (7) and rigid reinforcement (8), said plates, layers and reinforcement presenting surfaces of revolution about an axis constituted by the axis (ZZ') of said pipe and said duct when at rest; and
• said laminated abutment being:
- a frustoconical plane laminated abutment constituted by a plurality of layers of elastomer (7) and rigid reinforcement (8) in the form of superposed washers, including a rigid plate of frustoconical shape (9) inscribed within a frustoconical envelope surface, said frustoconical plate surmounting said plurality of superposed layers of elastomer and rigid reinforcement; or
- a cylindrical laminated abutment constituted by a plurality of layers of elastomer (7) and rigid reinforcement (8) in the form of adjacent coaxial tubes.

2. A system according to claim 1, **characterised in that** said junction means (3) comprise at least one of said elastic and leakproof flexible joints at each of said orifices (5, 6).

3. A system according to claim 1 or 2, **characterised in that** said frustoconical plate (9) has a central cylindrical cavity secured to said pipe.

4. A system according to one of claims 1 to 3, **characterised in that** said layers of elastomer (7) and rigid reinforcement (8) in the form of superposed washers are inscribed in a frustoconical envelope surface.

5. A system according to one of claims 1 to 4, **characterised in that** said laminated abutment comprises an inner cylindrical rigid plate (11) secured to the outer surface of said pipe and an outer cylindrical rigid plate (12) secured to said can, preferably via an annular flange (13).

6. A system according to any one of claims 1 to 5, **characterised in that** said frustoconical plane laminated abutment is placed at the top end of said can above said top orifice (5) and outside said can.

7. A system according to any one of claims 1 to 5, **characterised in that** said frustoconical plane laminated abutment is placed at the bottom end of said can (1) beneath said bottom orifice (6) and outside said can.

8. A system according to any one of claims 1 to 6, **characterised in that** it comprises:
· a frustoconical plane laminated abutment (3₁) at the top end of said can above the top orifice (5) of said can; and
. a cylindrical laminated abutment (3₂) at the bottom end of said can, beneath the bottom orifice (6) of said can.

9. A system according to any one of claims 1 to 6, **characterised in that** one of said top and bottom orifices of said can has a flexible and leakproof resilient joint constituted by a said cylindrical laminated abutment, and that the other of said orifices has an abutment comprising a rigid plate of frustoconical shape with the larger base of said frustoconical shape being situated at its bottom end, said plate preferably surmounting one of said laminated abutments.

10. A system according to one of claims 1 to 9, **characterised in that** said frustoconical plate is an integral portion of the riser.

11. A system according to any one of claims 1 to 5, 7, 9 and 10, **characterised in that** it comprises:
- a frustoconical plane laminated abutment (3₁) at the bottom end of said can above the bottom orifice (6) and inside said can; and
- a cylindrical laminated abutment (3₂) at the top end of said can.

12. A system according to any one of claims 1 to 11, **characterised in that** said flexible joint transmits stresses at the junction:
• for twisting movements of said pipe relative at least to axes (XX', YY') perpendicular to the axis (ZZ') of said can, such that the axis of said pipe can depart angularly from the axis of said can at said orifices; and
• movement(s) including a component in translation extending transversely to said pipe relative to said can at least in directions (XX', YY') that are perpendicular to said axis (ZZ') of said can, such that the axis of said pipe can depart transversely from the axis of said can within said orifices.

13. A system according to any one of claims 1 to 8, **characterised in that** said can has at least two rated safety valves respectively against explosion (20) and against implosion (21) in the event of a leak occurring **in that** portion of said pipe which is situated inside said can or inside the envelope of said can or in said flexible joint.

14. A system according to one of claims 1 to 13, **characterised in that** the buoyancy of said submarine pipe is provided by said floats without adding additional tensioning means secured to the floating support.
